# FASCICULE DE BREVET EUROPEEN

(11) **EP 0 911 143 B1**
(45) Date de publication et mention de la délivrance du brevet: **05.03.2003**
(21) Numéro de dépôt: 98420192.1
(22) Date de dépôt: 19.10.1998
(51) Int. Cl.: B29C 70/44

(54) **Procédé de moulage d'une pièce globalement cylindrique à profil creux en matière composite, et moule pour sa fabrication**
Verfahren zum Formen eines im wesentlichen zylindrischen hohlen Verbundgegenstandes und Formwerkzeug zu dessen Herstellung
Process for moulding a substantially cylindrical hollow article made of composite material and mould for its manufacture

(30) Priorité: 20.10.1997 FR 9713396
(43) Date de publication de la demande: 28.04.1999
(73) Titulaire: SARMA, F-26240 Saint-Vallier (FR)
(72) Inventeur: Pourrat, Jean Claude, 07300 Plats (FR); Bourgeois, Alain Paul, 26140 Albon (FR); Rocher, Jacky Elie Hippolyte, 26240 Saint Uze (FR)
(74) Mandataire: Myon, Gérard Jean-Pierre

(56) Documents cités:
- FR-A- 2 532 581
- FR-A- 2 602 458
- GB-A- 1 453 936
- US-A- 2 815 534
- US-A- 5 217 555

## Description

L'invention a trait à un procédé de moulage et à un moule pour la fabrication d'une pièce globalement cylindrique à profil creux en matière composite. L'invention a également trait à une pièce réalisée grâce à la mise en oeuvre de ce procédé ou de ce moule.

Par pièce globalement cylindrique, on entend toute pièce dont la surface extérieure est formée, sur sa plus grande partie, de génératrices parallèles quelle que soit la forme de sa section qui peut être circulaire, mais également ovale ou polygonale.

GB-A-1,453,936 enseigne de mouler une pièce creuse par injection de résine sur un tube préformé en fibres selon le préambule de la revendication 1. GB-A-1453936 décrit aussi un moule pour l'injection d'une telle pièce. L' introduction de ce tube dans le moule correspondant et son extraction après moulage sont délicates.

Dans le domaine de la construction aéronautique, il est connu de réaliser des bielles de structure ou de commande en matière plastique composite, notamment à base de résine thermodurcissable. Un problème qui se pose lors du moulage de ces pièces est que leur forme les rend difficiles à démouler. Dans le brevet français 2 457 173, on prévoit un dispositif de moulage constitué d'un tube en matière déformable fendu longitudinalement et prévu pour se dilater transversalement de façon à permettre l'extraction de la pièce une fois moulée. Ce dispositif n'est pas pratique à mettre en oeuvre et sa durée de vie est relativement courte car le matériau constitutif du moule est sollicité à de nombreuses reprises, de sorte qu'il perd rapidement son élasticité naturelle.

C'est à ces inconvénients qu'entend plus particulièrement remédier l'invention, en proposant un procédé de moulage ne nécessitant pas l'utilisation d'un moule élastique ou complexe et permettant d'obtenir des pièces d'une grande homogénéité et dont les propriétés mécaniques sont constantes.

Dans cet esprit, l'invention concerne un procédé de moulage d'une pièce globalement cylindrique à profil creux en matière composite, dans lequel :
- on préforme un tube de tissu de fibres de renfort par enroulement sur un mandrin
- on introduit ledit tube dans un moule dont le volume intérieur présente une surface globalement cylindrique et,
- on injecte une résine thermodurcissable dans ledit moule,
caractérisé en ce qu'il comprend les étapes consistant à :
- introduire partiellement dans au moins une extrémité dudit tube un manchon de tissu de fibres de renfort,
- monter un premier sabot sur ledit moule au niveau de ladite extrémité,
- disposer ledit manchon dans une empreinte de moulage dudit sabot,
- insérer une vessie gonflable dans ledit tube et ledit manchon,
- monter un second sabot sur ledit moule, ledit second sabot définissant avec ledit premier sabot un logement de moulage de l'extrémité de ladite pièce et
- fermer ledit moule avant injection de la résine tandis que
- le tube est préformé avec un chauffage à une température comprise entre 100 et 150°C pendant une durée comprise entre 10 et 45 minutes et
- la résine est injectée dans le moule à une température comprise entre 80 et 160°C alors que ladite vessie est dilatée pneumatiquement.

Grâce à l'invention, le préformage du tube de tissu de fibres de verre permet l'introduction de celui-ci à l'intérieur du moule alors qu'il présente une ouverture dont la section est de diamètre sensiblement égal à celui de la pièce terminée. La réalisation de la ou des extrémités, grâce à des manchons de tissu de fibres de renfort disposés dans des sabots, permet une mise en place ferme et précise de ces extrémités dans ces sabots.

Selon des aspects avantageux du procédé de l'invention, celui-ci consiste également à :
- soumettre la résine thermodurcissable à une étape de polymérisation à une température comprise entre 120 et 180°C pendant une durée comprise entre 30 minutes et 5 heures. Cette étape permet d'atteindre un état de vitrification de la résine thermodurcissable qui confère à la pièce ainsi réalisée une bonne rigidité et un bon état de surface ;
- placer temporairement, de part et d'autre du manchon en place dans l'empreinte des sabots, des languettes de protection de la zone du manchon située en regard du plan joint des sabots. Ceci permet d'éviter un éventuel coincement du manchon au niveau du plan de joint des sabots, ce qui aurait pour conséquence d'affaiblir mécaniquement l'extrémité de la pièce ainsi formée ;
- injecter la résine par une extrémité du moule alors qu'une dépression est créée à l'autre extrémité du moule. Cet aspect de l'invention garantit une répartition homogène de la résine à l'intérieur du moule quel que soit le positionnement du tube de tissu de fibres de renfort dans le volume intérieur du moule. Ceci contribue également à la bonne homogénéité de la pièce formée grâce au procédé de l'invention.

Selon un autre aspect avantageux de l'invention, le tissu de fibres de renfort est réalisé à partir de fibres de carbone, de verre ou d'aramide, alors que la résine est une résine époxyde.

L'invention concerne également un moule permettant la mise en oeuvre du procédé précédemment décrit et, plus spécifiquement un moule comprenant :
- une partie centrale bi-partite définissant un volume intérieur présentant une surface intérieure globalement cylindrique,
- au moins une partie d'extrémité formée de deux sabots aptes à être assemblés sur la partie centrale,
- au moins un bouchon apte à fermer le débouché d'un logement de moulage formé entre les deux sabots.

Grâce à la structure du moule de l'invention, il est possible de réaliser chaque pièce de façon simple tout en garantissant une bonne homogénéité.

Selon des aspects avantageux du moule de l'invention, on peut prévoir que :
- la partie centrale est constituée de deux corps allongés en contact sur un plan de joint, chaque corps comprenant des moyens d'assemblage et/ou de centrage par rapport à l'autre corps, des moyens de centrage et des moyens de fixation des sabots. Cette structure de la partie centrale permet une fabrication aisée de cette partie centrale par usinage et un démontage du moule après son utilisation, notamment en vue de son nettoyage ;
- les sabots sont pourvus de moyens de centrage mutuels, de moyens de centrage et de moyens de fixation sur la partie centrale. Ces différents moyens de centrage et de fixation garantissent un positionnement adéquat des sabots par rapport à la partie centrale tout au long du processus de fabrication et donc une bonne géométrie des extrémités de la pièce réalisée grâce au moule de l'invention ;
- le bouchon comprend un orifice central apte à être obturé par un coin, ce coin étant assemblé par des moyens amovibles sur le bouchon. Ce coin garantit une très bonne étanchéité de l'obturation de l'orifice central du bouchon et peut éventuellement être pourvu d'un orifice de passage de l'air de mise en pression de la vessie gonflable ou de l'air extrait du moule en cours d'injection de la résine.

L'invention sera mieux comprise et d'autres avantages de celle-ci apparaîtront plus clairement à la lumière de la description qui va suivre d'un mode de réalisation d'un moule de fabrication d'une pièce globalement cylindrique conforme à son principe et de son procédé de mise en oeuvre, donnée uniquement à titre d'exemple et faite en référence aux dessins annexés dans lesquels :
- la figure 1 est une représentation schématique de principe de l'enroulement d'un tissu de fibres de renfort ;
- la figure 2 est une représentation schématique de principe de l'introduction d'un tube de tissu de fibres de renfort préformé à l'intérieur de la partie centrale d'un moule conforme à l'invention
- la figure 3 est une représentation schématique de principe de la mise en place d'un premier sabot d'extrémité du moule de l'invention ;
- la figure 4 est une représentation schématique de principe de la mise en place d'un manchon destiné à former l'extrémité d'une pièce moulée grâce au moule de l'invention et d'un second sabot destiné à coopérer avec le premier sabot ;
- la figure 5 est une représentation schématique de principe du moule des figures précédentes lors de la mise en place d'une vessie et d'un bouchon d'extrémité ;
- la figure 6 est une coupe longitudinale partielle selon la ligne VI-VI à la figure 5 après mise en place de la vessie ; on y a représenté un bouchon en traits mixtes ;
- la figure 7 est une représentation schématique de la mise en place d'un coin d'obturation du bouchon visible à la figure 5, avec arrachement partiel, et
- la figure 8 est une représentation schématique de principe de l'installation utilisée lors de l'étape d'injection de la résine thermodurcissable du procédé de l'invention.

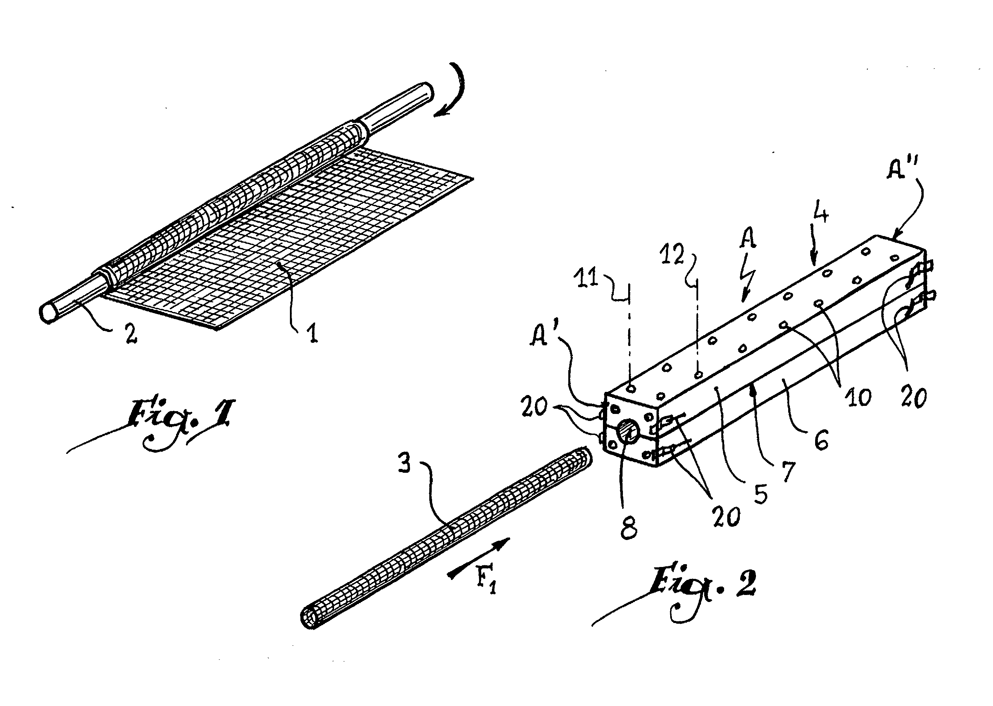

A la figure 1, un tissu 1 de fibres de carbone est enroulé sur un mandrin 2 de façon à former un tube creux 3.

Il convient de noter que des fibres de verre ou d'aramide pourraient être utilisées à la place de fibres de carbone. On pourrait également utiliser à la place d'un unique morceau de tissu 1, plusieurs bandes de tissu superposées et préalablement chauffées et comprimées pour adhérer entre elles.

Lorsque la bande de tissu 1 est en place sur le mandrin 2, on l'introduit dans un four chauffé à une température comprise entre 100 et 150°C, de préférence de l'ordre de 120°C, pendant une durée comprise entre 10 et 45 minutes, par exemple de l'ordre de 30 minutes.

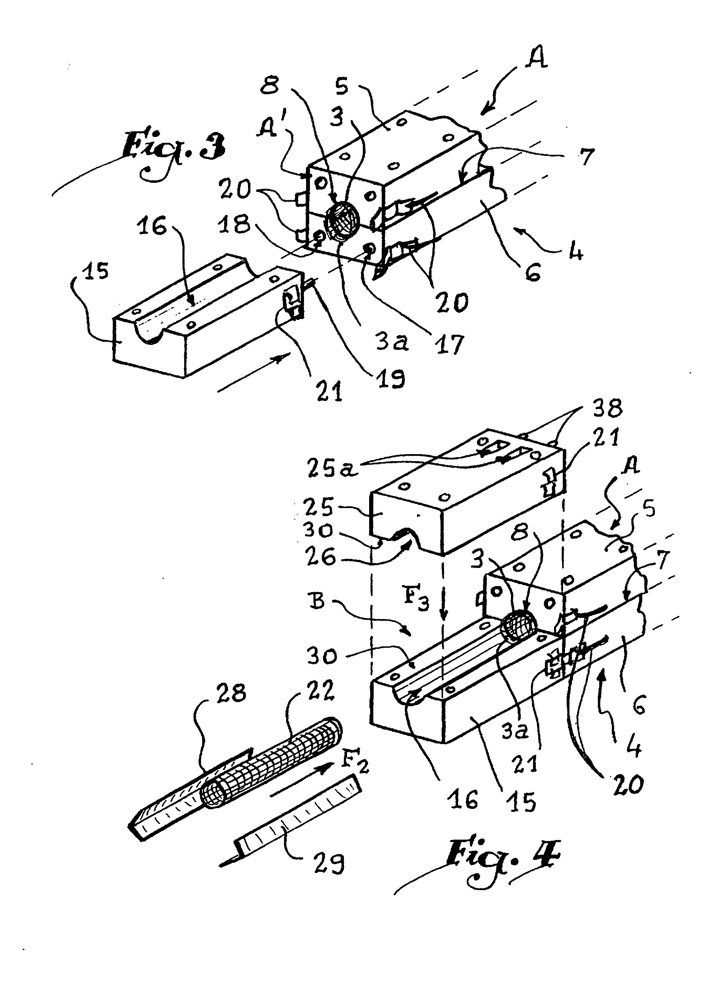

A la suite de cette opération de chauffage, on obtient un tube de tissu de fibres de renfort qu'on peut aisément faire coulisser par rapport au mandrin 2 et qui apparaît avec la référence 3 à la figure 2.

A la figure 2, est également représentée la partie centrale A d'un moule 4, cette partie centrale étant constituée de deux corps allongés 5 et 6 reposant l'un contre l'autre grâce à une surface de contact 7. Les corps 5 et 6 définissent entre eux un volume intérieur globalement cylindrique 8 dans la partie A.

Le diamètre du mandrin 2 est choisi légèrement inférieur à celui du volume 8, de telle sorte que le tube 3 une fois réalisé peut être introduit dans la direction de la flèche F₁ de la figure 2 à l'intérieur du volume 8.

Les corps 5 et 6 sont assemblés entre eux grâce à des perçages 10 perpendiculaires à la direction principale du volume 8 et destinés à recevoir des boulons 11 ou des pions de centrage 12.

Lorsque le tube 3 est en place à l'intérieur du volume 8, il dépasse légèrement à chaque extrémité A' et A" de la partie centrale A.

On monte alors sur l'extrémité A' un premier sabot 15 qui définit une empreinte 16 pour une partie d'extrémité de la pièce à réaliser. Cette empreinte 16 dépend de la forme recherchée pour cette extrémité qui peut être à chape intégrée, à chape double intégrée, à rotule intégrée ou comprendre un insert dans le cas d'une bielle réglable. On comprend qu'on peut utiliser une unique partie centrale A avec plusieurs sabots ou jeux de sabots 15 en fonction de la géométrie recherchée pour la pièce à réaliser.

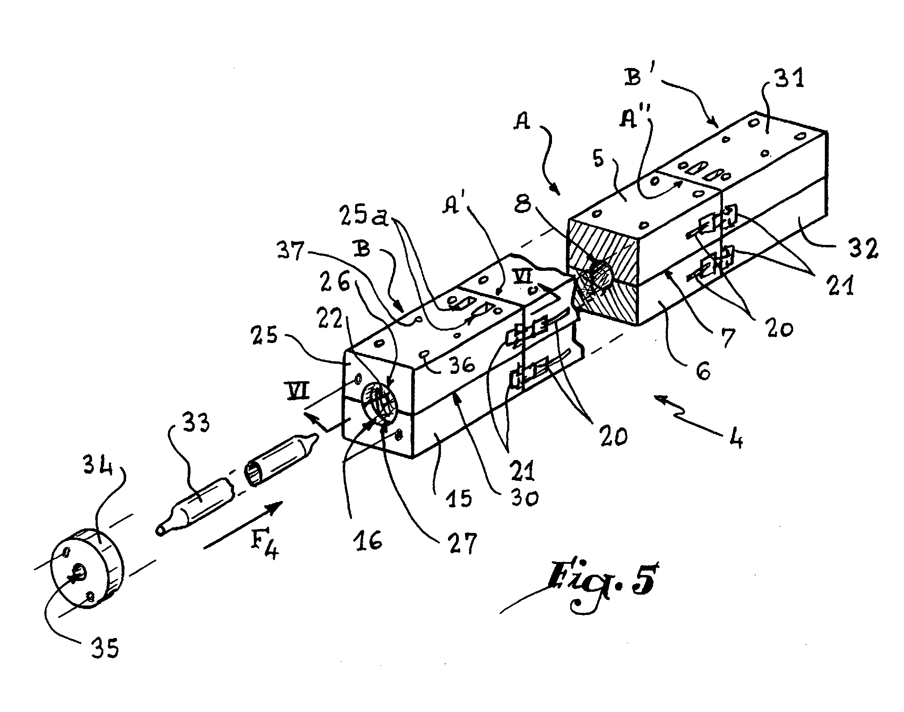

Le corps 6 comprend deux perçages 17 et 18 globalement parallèles au volume 8 et destinés à recevoir des pions de centrage, dont un seul est visible à la figure 3 avec la référence 19, qui permettent de positionner efficacement le sabot 15 par rapport au corps 6. Sur chaque côté du corps 6 sont disposées des attaches articulées 20 destinées à coopérer avec des crochets 21 fixés de chaque côté du sabot 15.

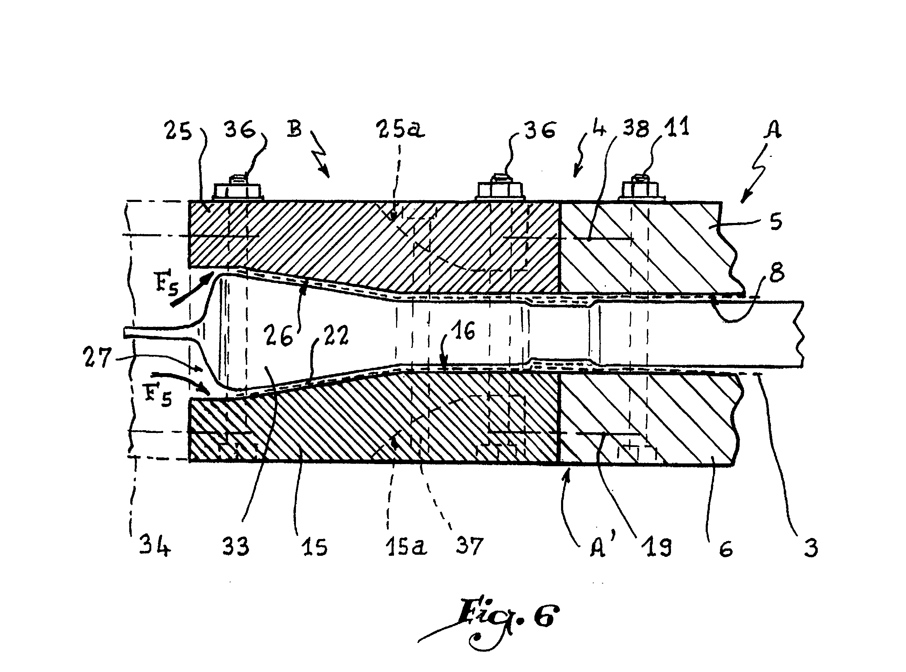

Lors de la mise en place du sabot 15 sur le corps 6, l'opérateur est guidé par la coopération des pions de centrage, tels que le pion 19, et des perçages 17 et 18. Lorsque le sabot 15 est plaqué contre l'extrémité A' de la partie centrale A, il est possible de mettre en tension les attaches élastiques 20. On est alors dans la position de la figure 4.

Dans cette position, on introduit partiellement, dans l'extrémité 3a du tube 3 visible aux figures 3 et 4, un manchon 22 formé d'un tissu de fibre de renfort tissé de façon circulaire ou en "chaussette". Ce manchon peut également être constitué de plusieurs manchons ou "chaussettes" individuels disposés les uns à l'intérieur des autres. Le manchon 22 est destiné à constituer l'extrémité de la pièce à réaliser grâce au moule de l'invention. Le manchon 22 est disposé dans l'empreinte 16 selon la flèche F₂ à la figure 4.

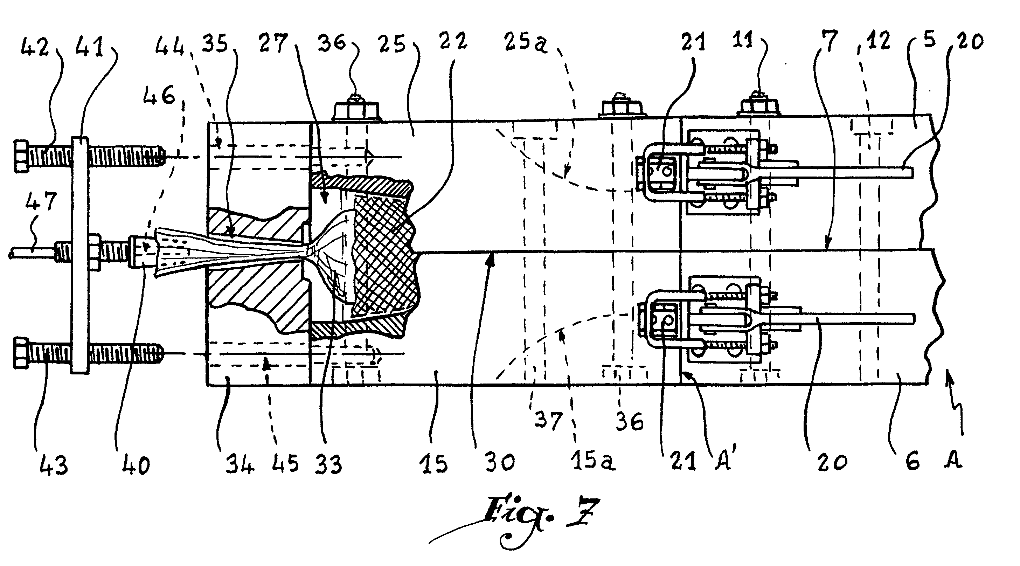

Un second sabot 25 est monté sur le sabot 15 au contact de l'extrémité du corps 5 et vient recouvrir le manchon 22. Le sabot 25 est pourvu d'une empreinte 26 dont la géométrie est du même type de celle de l'empreinte 16. Lorsque les deux sabots 15 et 25 sont en place par rapport à la partie A du moule 4, ils définissent une partie d'extrémité B qui est représentée à la figure 5. Dans cette position, un logement 27 est défini entre eux pour le moulage de l'extrémité de la pièce dont le manchon 22 est destiné à constituer l'armature.

Comme il apparaît plus clairement à la figure 4, des languettes 28 et 29 sont prévues pour être disposées de part et d'autre du manchon 22 au niveau du plan de joint 30 des sabots 15 et 25 avant la mise en place du sabot 25. Ces languettes 28 et 29 évitent que le manchon 22 ne soit pincé entre les sabots 15 et 25 lors de la mise en place du sabot 25, représentée par la flèche F₃ à la figure 4. Dès que le sabot 25 est en place, les languettes 28 et 29 peuvent être retirées.

Bien entendu, un second jeu de sabots 31 et 32 peut être disposé au niveau de la seconde extrémité A" de la partie centrale A, de façon à constituer une seconde partie d'extrémité B' du moule 4. Ceci est représenté à la figure 5.

Sur cette figure, on a référencé 33 une vessie prévue pour être engagée à l'intérieur du manchon 22, du tube 3 et du manchon correspondant disposé dans la partie d'extrémité B'. Cette vessie 33 est destinée à être alimentée en air sous pression dans une étape ultérieure du processus de fabrication de façon à comprimer le tube 3 et les manchons 22 et équivalent (disposé au niveau de la seconde extrémité A" et non représenté) vers les surfaces périphériques des logements 8, 27 ou équivalent. La vessie 33 est mise en place selon la direction de la flèche F₄ à la figure 5. On note cependant que la vessie 33 pourrait être mise en place à tout moment après la mise en place du tube 3 dans le volume 8, voire même dans le tube 3 avant sa mise en place dans le volume 8. On peut notamment prévoir qu'elle est introduite dans le ou les manchons 22 et dans le tube 3 avant la fixation et/ou le serrage du sabot 25. Avantageusement, la vessie 33 est mise en place après les manchons 22, de telle sorte qu'elle ne gêne pas leur mise en place.

Un bouchon 34 est prévu pour fermer le débouché du logement 27 lorsque la vessie 33 et le manchon 22 sont en place. Ce bouchon 34 est pourvu d'un orifice central 35 dont la fonction sera expliquée ci-après.

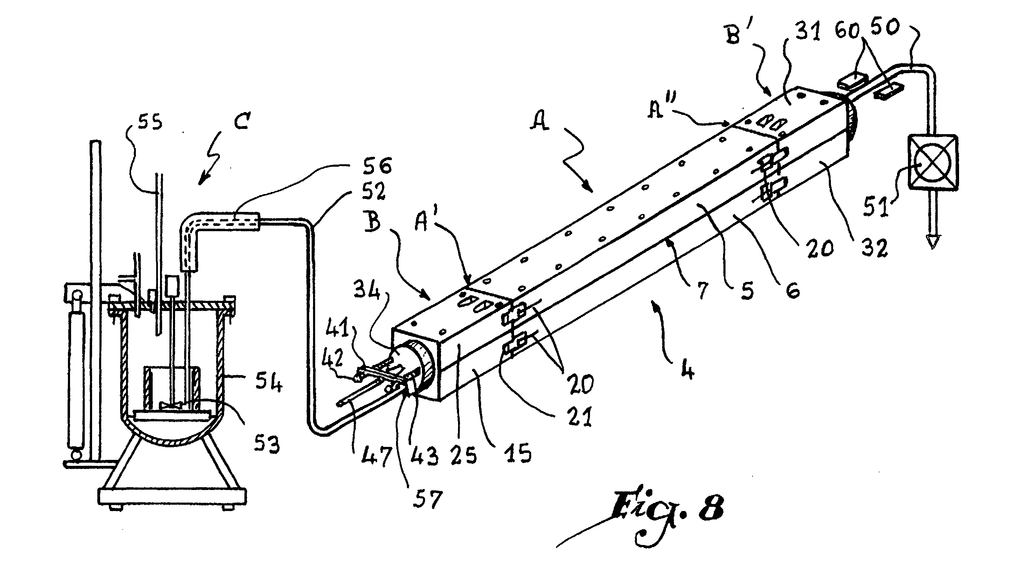

Comme il apparaît plus clairement à la figure 6, des boulons 36 et des pions 37 sont prévus perpendiculairement à l'axe du tube 3 pour assembler les sabots 15 et 25. Des pions 38, dont un seul est visible à la figure 4, permettent également le positionnement du sabot 25 par rapport au corps 5 de la partie centrale A. Les pions 38 sont analogues aux pions 19 utilisés pour le sabot 15. Les pions 19 et 38 sont manoeuvrables grâce à des encoches 15a et 25a prévues sur les surfaces externes des sabots 15 et 25 pour exercer sur l'extrémité des pions 19 et 38 un effort dirigé vers les corps 5 et 6.

Comme il apparaît plus clairement à la figure 7, un coin 40 est prévu pour obturer l'orifice 35 du bouchon 34. Le coin 40 a une surface extérieure en forme de tronc de cône. La surface intérieure de l'orifice 35 est également en forme de tronc de cône. Le coin 40 est porté par une platine 41 pourvue de deux vis 42 et 43 de fixation sur le bouchon 34 qui comprend deux taraudages 44 et 45 de réception des vis 42 et 43. On comprend que le serrage des vis 42 et 43 dans les taraudages 44 et 45 permet d'obtenir une grande étanchéité de l'obturation de l'orifice 35 par le coin 40.

Le coin 40 est pourvu d'un perçage axial 46 en communication avec une ligne 47 d'alimentation en air comprimé. Ainsi, pour autant que l'on a pris la précaution de faire dépasser la vessie 33 à l'extérieur de l'orifice 35, comme cela est représenté à la figure 7, il est possible d'injecter de l'air sous pression à l'intérieur de la vis 33, grâce au coin 40.

Un second bouchon, non représenté, est prévu du côté de l'extrémité B' du moule 4 de l'invention. Dans ce bouchon, on peut prévoir un perçage permettant de mettre en communication le volume intérieur du moule et un tube 50 d'extraction de l'air compris dans le volume intérieur du moule qui est représenté à la figure 8. Sur cette figure, le tube 50 est relié à une pompe à vide 51 d'un type connu en soi.

Une ligne 52 est prévue pour alimenter le volume intérieur du moule 4 à partir d'une unité C de conditionnement de la résine thermodurcissable en vue de son injection autour de la vessie 33, comme représenté par les flèches F₅ de la figure 6. Cette unité comprend un agitateur 53 dont la pale est disposée à l'intérieur d'un pot sous pression 54 alimenté en air comprimé grâce à une conduite 55 à partir d'une source non représentée.

Comme cela est représenté schématiquement par la gaine 56, la ligne 52 est isolée thermiquement par rapport à l'atmosphère ambiante. Un chauffage à température adaptée a lieu à l'intérieur du pot 54. On note que le bouchon 34 est pourvu d'un second orifice 57 pour l'injection de la résine thermodurcissable, telle que notamment une résine époxyde, à l'intérieur du moule 4.

L'injection a lieu par l'une des extrémités B alors que la mise en dépression de l'intérieur du moule grâce à la pompe 51 a lieu par l'autre extrémité B'. L'injection est prévue à une température comprise entre 80 et 160°, c'est-à-dire à une température à laquelle la résine est suffisamment fluide pour se répartir de façon homogène dans le volume intérieur du moule, alors que la vessie est dilatée par injection d'air comprimé à travers la ligne d'alimentation 47. On peut prévoir que l'injection a lieu jusqu'à ce qu'un capteur 60 détecte le passage d'un front de résine à l'intérieur de la conduite d'extraction 50. En effet, le passage d'un tel front signifie que le volume intérieur du moule 4 est rempli de résine.

Lorsque la résine est en place à l'intérieur du moule, on place celui-ci dans un four à une température comprise entre 120 et 180° pendant une durée comprise en 30 minutes et 5 heures, de façon à obtenir une polymérisation complète de la résine. En pratique, on a obtenu de très bons résultats avec un temps de polymérisation de l'ordre de 2 heures, ce qui représente un progrès sensible par rapport aux procédés de l'art antérieur dans lesquels les temps de polymérisation étaient de l'ordre de 7 heures, alors que des irrégularités dans la répartition de la résine ne pouvaient pas être évitées.

Ainsi, une pièce réalisée grâce au procédé et au moule de l'invention est obtenue à moindre coût et présente des propriétés mécaniques totalement satisfaisantes.

## Revendications

1. Procédé de moulage d'une pièce globalement cylindrique à profil creux en matière composite, dans lequel :
- on préforme un tube (3) de tissu (1) de fibres de renfort par enroulement sur un mandrin (2)
- on introduit ledit tube dans un moule (4) dont le volume intérieur (8) présente une surface globalement cylindrique et,
- on injecte une résine thermodurcissable dans ledit moule,
**caractérisé en ce qu'**il comprend les étapes consistant à :
- introduire partiellement dans au moins une extrémité (3a) dudit tube un manchon (22) de tissu de fibres de renfort,
- monter un premier sabot (15) sur ledit moule (4) au niveau de ladite extrémité,
- disposer ledit manchon dans une empreinte (16) de moulage dudit sabot,
- insérer une vessie gonflable (33) dans ledit tube et ledit manchon,
- monter un second sabot (25) sur ledit moule, ledit second sabot définissant avec ledit premier sabot un logement (27) de moulage de l'extrémité de ladite pièce et
- fermer ledit moule avant injection de la résine tandis que
- le tube (3) est préformé avec un chauffage à une température comprise entre 100 et 150°C pendant une durée comprise entre 10 et 45 minutes et
- la résine est injectée dans le moule à une température comprise entre 80 et 160°C alors que ladite vessie est dilatée pneumatiquement.

2. Procédé selon la revendication 1, **caractérisé en ce qu'**il consiste en outre à soumettre ladite résine thermodurcissable à une étape de polymérisation à une température comprise entre 120 et 180°C pendant une durée comprise entre 30 minutes et 5 heures.

3. Procédé selon la revendication 1, **caractérisé en ce qu'**il consiste à placer temporairement de part et d'autre dudit manchon (22) en place dans ladite empreinte (16), des languettes (28, 29) de protection de la zone dudit manchon située en regard du plan de joint (30) desdits sabots.

4. Procédé selon la revendication 1, **caractérisé en ce qu'**il consiste à injecter ladite résine par une extrémité (B) dudit moule (4) alors qu'une dépression (51) est créée à l'autre extrémité (B') dudit moule.

5. Procédé selon la revendication 1, **caractérisé en ce que** le tissu (1) de fibres de renfort est réalisé à partir de fibres de carbone, de verre ou d'aramide alors que la résine est une résine époxyde.

6. Moule pour la fabrication d'une pièce globalement cylindrique à profil creux en matière composite, le moule comprenant :
- une partie centrale bi-partite (A) définissant un volume intérieur (8) présentant une surface intérieure globalement cylindrique
- au moins une partie d'extrémité (B, B') formée de deux sabots (15, 25, 31, 32) aptes à être assemblés sur ladite partie centrale
- au moins un bouchon (34) apte à fermer le débouché d'un logement (27) de moulage formé entre lesdits deux sabots.

7. Moule selon la revendication 6, **caractérisé en ce que** ladite partie centrale (A) est constituée de deux corps (5, 6) allongés en contact sur un plan de joint (7), chaque corps comprenant des moyens d'assemblage (11) et/ou de centrage (12) par rapport à l'autre corps, des moyens de centrage (17, 18) et des moyens de fixation (20) desdits sabots (15, 25).

8. Moule selon la revendication 6, **caractérisé en ce que** lesdits sabots (15, 25) sont pourvus de moyens de centrage mutuel (37), de moyens de centrage (19, 38) et de moyens de fixation (21) sur ladite partie centrale (A).

9. Moule selon la revendication 6, **caractérisé en ce que** ledit bouchon (34) comprend un orifice central (35) apte à être obturé par un coin (40), ledit coin étant assemblé par des moyens amovibles (41, 42) sur ledit bouchon.

## Patentansprüche

1. Formverfahren zum Formen eines im Wesentlichen zylindrischen hohlen Gegenstandes aus Verbundmaterial, bei dem man:
- ein Rohr (3) aus einem Gewebe (1) aus Verstärkungsfasern durch Wickeln auf einen Kern (2) vorformt
- das Rohr in eine Form (4) einsetzt, deren Innenvolumen (8) eine im Wesentlichen zylindrische Fläche aufweist und,
- ein wärmehärtbares Harz in die Form einspritzt,
**dadurch gekennzeichnet, dass** es die Schritte umfasst, die darin bestehen, dass:
- teilweise in mindestens ein Ende (3a) des Rohres eine Hülse (22) aus Verstärkungsfasergewebe eingeführt wird,
- ein erster Schuh (15) an die Form (4) im Bereich des Endes angesetzt wird,
- die Hülse in einem Formnest (16) des Schuhs angeordnet wird,
- eine aufblasbare Blase (33) in das Rohr und die Hülse eingeführt wird,
ein zweiter Schuh (25) an die Form angesetzt wird, wobei der zweite Schuh mit dem ersten Schuh einen Formraum (27) für das Ende des Gegenstandes bildet und
- die Form vor dem Einspritzen des Harzes geschlossen wird, während
- das Rohr (3) mit einer Beheizung bei einer Temperatur zwischen 100 und 150°C während einer Dauer zwischen 10 und 45 Minuten vorgeformt wird und
- das Harz in die Form mit einer Temperatur zwischen 80 und 160°C eingespritzt wird, wobei die Blase pneumatisch vergrößert wird.

2. Verfahren nach Anspruch 1, **dadurch gekennzeichnet, dass** es darüber hinaus darin besteht, das wärmehärtbare Harz einem Polymerisationsschritt bei einer Temperatur zwischen 120 und 180°C während einer Dauer von 30 Minuten bis 5 Stunden zu unterwerfen.

3. Verfahren nach Anspruch 1, **dadurch gekennzeichnet, dass** es darin besteht, temporär beidseitig der in dem Nest (16) in Stellung gebrachten Hülse (22) Zungen (28, 29) zum Schutz der Zone der Hülse, die in Ausrichtung zur Verbindungsebene (30) der Schuhe liegt, anzuordnen.

4. Verfahren nach Anspruch 1, **dadurch gekennzeichnet, dass** es darin besteht, das Harz über ein Ende (B) der Form (4) einzuspritzen, wobei ein Unterdruck (51) am anderen Ende (B') der Form erzeugt wird.

5. Verfahren nach Anspruch 1, **dadurch gekennzeichnet, dass** das Gewebe (1) aus Verstärkungsfasern aus Karbon-, Glas- oder Aramidfasern hergestellt wird, wobei das Harz ein Epoxidharz ist.

6. Form für die Herstellung eines im Wesentlichen zylindrischen hohlen Gegenstandes aus Verbundmaterial, wobei die Form umfasst:
- einen zweiteiligen (A) mittleren Teil, der ein Innenvolumen (8) mit einer im Wesentlichen zylindrischen Innenfläche einschließt
- mindestens einen aus zwei Schuhen (15, 25, 31, 32) gebildeten Endteil (B, B'), wobei die Schuhe mit dem mittleren Teil zusammensetzbar sind
- mindestens einen Verschluß (34), der geeignet ist, die Mündung eines zwischen zwei Schuhen gebildeten Formraumes (27) zu verschließen.

7. Form nach Anspruch 6, **dadurch gekennzeichnet, dass** der mittlere Teil (A) aus zwei langgestreckten, an einer Verbindungsebene (7) in Kontakt stehenden Körpern (5, 6) gebildet wird, wobei jeder Körper Mittel zum Zusammenfügen (11) und/oder zum Zentrieren (12) in Bezug auf den anderen Körper, Zentriermittel (17, 18) und Befestigungsmittel (20) der Schuhe (15, 25) umfasst.

8. Form nach Anspruch 6, **dadurch gekennzeichnet, dass** die Schuhe (15, 25) mit Mitteln zur wechselseitigen Zentrierung (37), Zentriermitteln (19, 38) und Mitteln zum Befestigen (21) an dem mittleren Teil (A) versehen sind.

9. Form nach Anspruch 6, **dadurch gekennzeichnet, dass** der Verschluss (34) eine Mittelöffnung (35) umfasst, die durch einen Keil (40) verschließbar ist, wobei der Keil durch lösbare Mittel (41, 42) mit dem Verschluß zusammengesetzt sind.

## Claims

1. Process for moulding an overall cylindrical part with hollow profile in composite material, in which:
- a tube (3) of reinforcing fibre fabric (1) is preformed by rolling on a mandrel (2)
- this tube is introduced into a mould (4), the internal volume (8) of which has an overall cylindrical surface and,
- a thermosetting resin is injected into this mould,
**characterised by** the fact that it comprises stages consisting of:
- partly introducing a sleeve (22) of reinforcing fibre fabric into at least one end (3a) of this tube,
- fitting a first block (15) on this mould (4) at this end,
- arranging this sleeve in a moulding cavity (16) of this block,
- inserting an inflatable bladder (33) into this tube and this sleeve,
- fitting a second block (25) on this mould, this second block defining with the first block a moulding housing (27) for the end of this part and
- closing this mould before injecting the resin, whereas
- the tube (3) is preformed by heating to a temperature of between 100 and 150E C for a duration of between 10 and 45 minutes and
- the resin is injected into the mould at a temperature of between 80 and 160E C, whereas this vessel is dilated pneumatically.

2. Process according to claim 1, **characterised by** the fact that it also consists of subjecting this thermosetting resin to a polymerisation stage at a temperature of between 120 and 180E C for a duration of between 30 minutes and 5 hours.

3. Process according to claim 1, **characterised by** the fact that it consists of placing strips (28, 29) for protecting the area of this sleeve situated with reference to the parting line (30) of these blocks temporarily on both sides of this sleeve (22) in place in this cavity (16).

4. Process according to claim 1, **characterised by** the fact that it consists of injecting this resin through one end (B) of this mould (4), whereas a depression (51) is created at the other end (B') of this mould.

5. Process according to claim 1, **characterised by** the fact that the reinforcing fibre fabric (1) is made from carbon, glass or aramid fibes, whereas the resin is epoxy resin.

6. Mould for making an overall cylindrical part with hollow profile in composite material, the mould comprising:
- a two part central part (A) defining an internal volume (8) with an overall cylindrical internal surface
- at least one end part (B, B') formed by two blocks (15, 25, 31, 32) suitable for being assembled on this central part
- at least one plug (34) suitable for closing the outlet of a moulding housing (27) formed between these two blocks.

7. Mould according to claim 6, **characterised by** the fact that this central part (A) is made of two bodies (5, 6) arranged in contact on a parting line (7), each body comprising means of assembly (11) and/or centring (12) in relation to the other body, means of centring (17, 18) and means of fixing (20) these blocks (15, 25).

8. Mould according to claim 6, **characterised by** the fact that these blocks (15, 25) are provided with means of mutual centring (37), means of centring (19, 38) and means of fixing (21) on this central part (A).

9. Mould according to claim 6, **characterised by** the fact that this plug (34) comprises a central opening (35) suitable for being closed up by a wedge (40), this wedge being fitted on this plug by removable means (41, 42).
